# EUROPEAN PATENT APPLICATION

(11) **EP 4 769 063 A1**
(43) Date of publication of application: **01.07.2026**
(21) Application number: 24921790.2
(22) Date of filing: 23.12.2024
(51) Int. Cl.: G06F 1/16, F16C 11/04

(54) **ELECTRONIC DEVICE**

(30) Priority: 31.01.2024 CN 202410155259
(71) Applicant: Honor Device Co., Ltd., Shenzhen, Guangdong 518040 (CN)
(72) Inventor: CHEN, Zeda, Shenzhen, Guangdong 518040 (CN); HUANG, Long, Shenzhen, Guangdong 518040 (CN); ZHOU, Xi, Shenzhen, Guangdong 518040 (CN); TANG, Feng, Shenzhen, Guangdong 518040 (CN)
(74) Representative: Goddar, Heinz J.
(86) International application number: PCT/CN2024/141498
(87) International publication number: WO 2025/161768

(57) **Abstract**

This application discloses an electronic device, and relates to the field of notebook computers. The electronic device includes a first part and a second part. The first part and the second part are rotatably connected to each other through a rotating shaft, so that the electronic device can be unfolded or folded. A flexible printed circuit electrically connects an electronic element in the first part to a second electronic element in the second part. The second part further includes an elastic bracket, and the flexible printed circuit is wrapped around the elastic bracket. During unfolding of the electronic device, the first part pulls the flexible printed circuit out from the second part to the first part, and the flexible printed circuit drives the elastic bracket to deform; and during folding of the electronic device, the elastic bracket restores to an original shape, to retract the extended flexible printed circuit into the second part. The elastic bracket may be deformed and restore to the original shape to provide an elastic force to the flexible printed circuit, so that in a process of unfolding and folding, the flexible printed circuit can also be retracted after being pulled out, thereby preventing quality problems such as puckering and arching of the flexible printed circuit in the process, and improving the life span of the flexible printed circuit.

## Description

This application claims priority to Chinese Patent Application No. 202410155259.7, filed with the China National Intellectual Property Administration on January 31, 2024 and entitled "ELECTRONIC DEVICE", which is incorporated herein by reference in its entirety.

### TECHNICAL FIELD

Embodiments of this application relate to the field of notebook computers, and in particular, to an electronic device.

### BACKGROUND

A notebook computer (Notebook Computer) is also referred to as a "portable computer, a handheld computer, a palmtop computer, or a laptop computer", and is characterized primarily in that a body is compact and a display screen and the body can be folded together. Compared with a PC, the notebook computer is convenient to carry, and is a small-sized and portable personal computer.

A notebook computer generally includes two parts: a display side and a host side. The two parts are mechanically connected to each other through a hinge mechanism. A housing of the display side rotates relative to the host side around a rotation pivot of the hinge mechanism, thereby implementing unfolding and folding of the notebook computer. When electrical signal transmission needs to be performed between the display side and a system side, electronic elements in the display side and the host side may be electrically connected through a flexible printed circuit (flexible printed circuit, FPC).

During unfolding and folding of the notebook computer, because the display side usually needs to be unfolded or folded relative to the host side, the length of the flexible printed circuit is typically set to have a particular degree of slack. During unfolding, the display side typically pulls out the flexible printed circuit in the host side, but during folding, it is difficult to retract the pulled-out flexible printed circuit into the host side. The flexible printed circuit extending out from the system side is prone to arching during unfolding and folding due to length changes, and may even form severe compression, leading to fracture and failure of the flexible printed circuit.

### SUMMARY

Embodiments of this application provide an electronic device, to resolve a problem that during unfolding and folding of an electronic device such as an electrical notebook computer, a connection cable between a display side and a host side cannot be effectively retracted after being pulled out, which causes deformation of the connection cable during long-term unfolding and folding, affecting use quality of the connection cable.

To achieve the foregoing objective, the embodiments of this application use the following technical solution:

According to a first aspect, this application provides an electronic device. The electronic device includes a first part, a second part, and a flexible printed circuit. The first part and the second part are rotatably connected to each other through a rotating shaft, so that the electronic device can be unfolded or folded. The first part generally refers to a display side of the electronic device, and the second part generally refers to a host side of the electronic device. The first part and the second part are further electrically connected to each other through the flexible printed circuit. The second part further includes an elastic bracket, and the flexible printed circuit is wrapped around the elastic bracket. The elastic bracket has elasticity. The flexible printed circuit is wrapped around the elastic bracket, and after being pulled, the flexible printed circuit may drive the elastic bracket to deform.

During unfolding of the electronic device, the first part drives the flexible printed circuit to move from the second part to the first part, and the flexible printed circuit drives the elastic bracket to deform. During folding of the electronic device, the elastic bracket restores to an original shape, to retract the extended flexible printed circuit into the second part. In this technical solution, during unfolding and folding of the electronic device, the flexible printed circuit is directly pulled to move outward the second part, but the flexible printed circuit cannot be driven to move inward the second part. The elastic bracket is disposed, so that when moving outward during unfolding, the flexible printed circuit drives the elastic bracket to deform, and during folding, the elastic bracket restores to the original shape to provide an elastic force to the flexible printed circuit, to pull the flexible printed circuit back into the second part. In this way, in an unfolding and folding process, the flexible printed circuit can also be retracted after being pulled out, thereby preventing quality problems such as puckering and arching of the flexible printed circuit in the process, and improving the life span of the flexible printed circuit.

In a possible implementation of the first aspect, the elastic bracket includes a bracket body, a compression plate, and an elastic assembly. The elastic assembly includes a cross beam, a first connecting member, and a second connecting member, two ends of the cross beam being fixedly connected to the bracket body through the first connecting member and the second connecting member. The bracket body is fixedly connected to the second part, the flexible printed circuit is compressed on the bracket body by the compression plate, and the flexible printed circuit is wrapped around the cross beam.

In this implementation, one end of the flexible printed circuit is fastened by disposing the compression plate, so that when the flexible printed circuit is pulled, the elastic assembly may be driven to deform. The elastic assembly mainly provides an elastic force to the flexible printed circuit. The flexible printed circuit is wrapped around the cross beam. In this way, the flexible printed circuit can drive the cross beam to move, thereby driving the elastic assembly to deform. In addition, the cross beam can drive the flexible printed circuit to move, thereby implementing a function of pulling back the flexible printed circuit. That is, wrapping the flexible printed circuit around the cross beam is a specific connection manner for implementing that the flexible printed circuit may move relative to the cross beam, and implementing that the flexible printed circuit and the cross beam move together in a same direction.

In a possible implementation of the first aspect, both the first connecting member and the second connecting member are elastic. During unfolding of the electronic device, the flexible printed circuit is pulled out of the second part, the flexible printed circuit drives the cross beam to move, and the cross beam drives the first connecting member and the second connecting member to deform. During folding of the electronic device, the first connecting member and the second connecting member restore to the original shapes, to drive the cross beam to move, and the cross beam retracts the extended flexible printed circuit into the second part.

In this implementation, a specific form for the elastic bracket to provide an elastic force is provided. That is, the first connecting member and the second connecting member are deformed, and a process of restoring to the original shapes of the first connecting member and the second connecting member provides a pulling force for the flexible printed circuit.

In a possible implementation of the first aspect, the cross beam includes a first support beam and a second support beam, the first support beam and the second support beam being in close contact, the first support beam being a rigid beam, and the second support beam being a flexible beam. When the flexible printed circuit is wrapped around the cross beam, the flexible printed circuit is in contact with the second support beam.

In this implementation, the first support beam is disposed as a rigid beam, which may provide a strength guarantee for the cross beam, so that the cross beam can be kept straight, thereby preventing the cross beam from deforming and causing an excessively large local force on the flexible printed circuit. The second support beam is in contact with the flexible printed circuit, which can implement soft contact between the flexible printed circuit and the cross beam, thereby avoiding a loss of the flexible printed circuit caused by long-term friction.

In a possible implementation of the first aspect, a structure of the first connecting member is the same as a structure of the second connecting member. The first connecting member includes a first cross bar, a first vertical bar, and a second cross bar. Two ends of the first vertical bar are respectively connected to the first cross bar and the second cross bar, the first cross bar is connected to the bracket body, and the second cross bar is connected to the cross beam. The first vertical bar is perpendicular to both the first cross bar and the second cross bar, and the first cross bar is also kept perpendicular to the second cross bar.

In this implementation, the structure of the first connecting member and a specific structural design of the second connecting member are provided. Through different structural designs, the first connecting member and the second connecting member can be better deformed and restore to the original shapes.

In a possible implementation of the first aspect, both the first connecting member and the second connecting member are made of silicone rubber.

In a possible implementation of the first aspect, the elastic assembly further includes an elastic member, the elastic member being disposed on one side of the cross beam, and the flexible printed circuit being in contact with the elastic member when the flexible printed circuit is wrapped around the cross beam. During unfolding of the electronic device, the flexible printed circuit is pulled out of the second part, and the flexible printed circuit presses the elastic member, to deform the elastic member. During folding of the electronic device, the elastic member restores to an original shape, to retract the extended flexible printed circuit into the second part.

In this implementation, another implementation of the elastic bracket is provided. That is, an elastic member is disposed, so that when being pulled out, the flexible printed circuit presses the elastic member to deform, and is retracted by the elastic member when the elastic member restores to an original shape.

In a possible implementation of the first aspect, the elastic member is made of foam.

In a possible implementation of the first aspect, a cabling shape of the flexible printed circuit on the elastic bracket is an "S" shape, and the flexible printed circuit is separately in contact with the bracket body and the cross beam. A surface that is of the bracket body and that is in contact with the flexible printed circuit is a first contact surface, and a surface that is of the cross beam and that is in contact with the flexible printed circuit is a second contact surface. The first contact surface and the second contact surface are arc surfaces or elliptic surfaces, and central angles corresponding to the first contact surface and the second contact surface are less than 90°.

In this implementation, the cabling shape of the flexible printed circuit on the elastic bracket is set to an "S" shape, which is mainly for ease of fastening the flexible printed circuit, and enabling the flexible printed circuit to drive the elastic assembly or the elastic member on the elastic bracket to deform, to implement a function of pulling back the flexible printed circuit by using the elastic bracket. In addition, the cabling of the flexible printed circuit on the elastic bracket may alternatively be set to another shape, such as a "Z" shape or a "U" shape, provided that the flexible printed circuit can drive elastic assembly or the elastic member on the elastic bracket to deform.

In a possible implementation of the first aspect, the elastic bracket includes a bracket body, an elastic member, and a compression plate, the bracket body being fixedly connected to the second part, and the elastic member being fixedly connected to the bracket body. The flexible printed circuit is wrapped around the elastic member, and one end of the flexible printed circuit is compressed on the second part by the compression plate.

In this implementation, a specific shape of another elastic bracket is shown. The elastic member may be made of foam.

In a possible implementation of the first aspect, a cabling shape of the flexible printed circuit on the elastic bracket is a "U" shape, and the flexible printed circuit is in contact with the elastic member. A surface that is of the elastic member and that is in contact with the flexible printed circuit includes a first contact surface and a second contact surface. The first contact surface and the second contact surface are arc surfaces or elliptic surfaces, and central angles corresponding to the first contact surface and the second contact surface are less than 90°.

In this implementation, the flexible printed circuit is wrapped around the elastic bracket to form U-shaped cabling. By pulling the flexible printed circuit, the elastic member located in the U-shaped cabling may be deformed. When the elastic member restores to an original shape, the pulled-out flexible printed circuit may be retracted, thereby implementing a function of retracting the flexible printed circuit. After being wrapped around the elastic bracket, the flexible printed circuit bends at least at two places, and the places where the flexible printed circuit bends form contact surfaces with the elastic bracket. There are at least two of the foregoing contact surfaces between the entire flexible printed circuit and the elastic bracket. The contact surfaces on the elastic bracket should be disposed to be as smooth as possible, to prevent an excessively large bending amplitude of the flexible printed circuit. Therefore, the first contact surface and the second contact surface are set to arc surfaces or elliptic surfaces, and the central angles corresponding to the first contact surface and the second contact surface are set to be less than 90°, to ensure that the first contact surface and the second contact surface are smooth as much as possible. Certainly, the first contact surface and the second contact surface may alternatively be set to arc surfaces of other shapes. The first contact surface and the second contact surface are disposed to be as smooth as possible, so that a bending angle of the flexible printed circuit at the contact surfaces is greater than 90°.

In a possible implementation of the first aspect, the first part further includes a rotating shaft cover, the rotating shaft cover rotating with the first part relative to the second part. The flexible printed circuit passes through the rotating shaft cover.

In this implementation, a specific form in which the flexible printed circuit connects the first part and the second part is provided. That is, after exiting the first part, the flexible printed circuit passes through the rotating shaft cover and then enters the second part. Certainly, another form may alternatively be used. For example, after exiting the first part, the flexible printed circuit is disposed around the rotating shaft cover, is fastened to the rotating shaft cover, and then enters the second part.

In a possible implementation of the first aspect, a cover fabric is disposed on one side of the flexible printed circuit, and when the electronic device is unfolded or folded, the cover fabric shields the flexible printed circuit from view.

In this implementation, the cover fabric is disposed on one side of the flexible printed circuit, and when the electronic device is unfolded or folded, the cover fabric shields the flexible printed circuit from view, to prevent the flexible printed circuit located at a joint of the first part and the second part from being directly exposed to view to affect aesthetics of the electronic device. In addition, the flexible printed circuit is protected from being in contact with sharps from the outside, to prevent the sharps from damaging the flexible printed circuit.

In a possible implementation of the first aspect, a fastening post is disposed on the flexible bracket, one end of the cover fabric is fixedly connected to the fastening post, and the other end of the cover fabric is connected inside the rotating shaft cover through a compressing apparatus. The fastening post is disposed to help fasten the cover fabric.

In a possible implementation of the first aspect, the cover fabric is in close contact with the flexible printed circuit, the cover fabric moves together with the flexible printed circuit, one end of the cover fabric is fixedly connected to the elastic bracket, and the other end of the cover fabric is connected inside the rotating shaft cover through a compressing apparatus.

In this implementation, a specific connection relationship between the cover fabric and the flexible printed circuit is provided. That is, the cover fabric is disposed in close contact with the flexible printed circuit, which can protect the flexible printed circuit while improving aesthetics of the electronic device.

In a possible implementation of the first aspect, rotation angles of the first part and the second part are 0° to 180°.

In this implementation, the rotation angles of the first part and the rotation angle of the second part are set to 0° to 180°, and may be set to proper angles according to requirements, to meet different requirements of users.

### BRIEF DESCRIPTION OF DRAWINGS

FIG. 1A is a schematic diagram of an overall structure of an electronic device according to an embodiment of this application;
FIG. 1B is an exploded view of an electronic device according to an embodiment of this application;
FIG. 2 is a schematic diagram of a three-dimensional structure of a partial structure of an electronic device according to an embodiment of this application;
FIG. 3 is a partial sectional view of an electronic device according to an embodiment of this application;
FIG. 4 is another partial sectional view of an electronic device according to an embodiment of this application;
FIG. 5 is a partial sectional view of another electronic device according to an embodiment of this application;
FIG. 6 is another partial sectional view of another electronic device according to an embodiment of this application;
FIG. 7 is a schematic diagram of a connection structure between an elastic bracket and a second part in an electronic device according to an embodiment of this application;
FIG. 8 is a schematic diagram of a structure of an elastic bracket in an electronic device according to an embodiment of this application;
FIG. 9 is an exploded view of an elastic bracket in an electronic device according to an embodiment of this application;
FIG. 10 is a schematic diagram of a partial cross section of the elastic bracket shown in FIG. 8;
FIG. 11 is a schematic diagram of a structure of another elastic bracket in an electronic device according to an embodiment of this application;
FIG. 12 is an exploded view of another elastic bracket in an electronic device according to an embodiment of this application;
FIG. 13 is a schematic diagram of a structure of a first connecting member in the elastic bracket shown in FIG. 11;
FIG. 14 is a schematic diagram of a front structure of still another elastic bracket in an electronic device according to an embodiment of this application;
FIG. 15 is a schematic diagram of a rear structure of still another elastic bracket in an electronic device according to an embodiment of this application;
FIG. 16 is an exploded view of still another elastic bracket in an electronic device according to an embodiment of this application;
FIG. 17 is a schematic diagram of a structure of yet another elastic bracket in an electronic device according to an embodiment of this application; and
FIG. 18 is still another partial sectional view of an electronic device according to an embodiment of this application.

In the figures: 100-electronic device; 110-first part; 120-second part; 130-rotating shaft cover; 140-flexible printed circuit; 150-elastic bracket; 160-bracket body; 170-compression plate; 180-elastic assembly; 190-cover fabric;
111-first housing; 112-display screen;
121-second housing; 122-second electronic element;
161-through hole; 162-fastening post; 163-positioning post; 164-first contact surface; 165-second contact surface;
171-positioning hole;
181-first connecting member; 182-second connecting member; 183-cross beam; 184-elastic member;
1811-first cross bar; 1812-first vertical bar; 1813-second cross bar;
1831-first support beam; 1832-second support beam;
191-compressing apparatus.

### DESCRIPTION OF EMBODIMENTS

The following describes technical solutions of this application with reference to the accompanying drawings.

In embodiments of this application, the term "example", "for example", or the like is used to give an example, an illustration, or a description. Any embodiment or design scheme described as "example" or "for example" in embodiments of this application should not be construed as more preferred or more advantageous than other embodiments or design schemes. To be precise, the use of the term such as "example" or "for example" is intended to present a related concept in a specific manner.

In embodiments of this application, terms such as "first" and "second" are used only for the purpose of description and cannot be understood as indicating or implying relative importance or implicitly indicating a quantity of indicated technical features. Therefore, a feature defined with "first" or "second" may explicitly or implicitly include one or more features.

It should be understood that terms used in description of the various examples in this specification are merely intended to describe specific examples and are not intended to impose limitations. As used in the description of the various examples, singular forms, "a" or "an" and "the", are intended to also include plural forms, unless otherwise specified in the context clearly.

In this application, "at least one" refers to one, two, or more and "a plurality of" refers to two or more. "At least one of the following items (pieces)" or a similar expression thereof refers to any combination of these items, including any combination of singular items (pieces) or plural items (pieces). For example, at least one item (piece) of a, b, or c may represent: a, b, c, a-b, a-c, b-c, or a-b-c, where a, b, and c may be singular or plural.

It should be further understood that as used herein, the term "and/or" refers to and includes any and all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally represents an "or" relationship between associated objects.

It should be further understood that in this application, unless otherwise explicitly specified or defined, the term "connection" should be understood in a broad sense. For example, a "connection" may be a fixed connection, a sliding connection, a detachable connection, or an integral connection; or the "connection" may be a direct connection, or an indirect connection through an intermediate medium.

It should be further understood that the term "include" (also referred to as "includes", "including", "comprises", and/or "comprising"), when used in this specification, specifies the presence of stated features, integers, steps, operations, elements, and/or components, but does not preclude the presence or addition of one or more other features, integers, steps, operations, elements, components, and/or groups thereof.

It should be understood that "an embodiment", "another embodiment", or "a possible design manner" mentioned throughout the specification means that particular features, structures, or characteristics related to an embodiment or implementation are included in at least one embodiment of this application. Therefore, "in an embodiment of this application" or "in another embodiment of this application", or "a possible design manner" that appears throughout the specification may not necessarily refer to a same embodiment. In addition, the particular features, structures, or characteristics may be combined in one or more embodiments in any suitable manner.

It should be further understood that specific numerical values mentioned in embodiments of this application are not intended to limit specific features and specific sizes of structures. A related numerical value may be used as an example for ease of understanding, or may be an optimal theoretical value of a feature in theory. In practice, a related size may be a range of an attachment of this value. For example, the range may be an optimal theoretical value ± 10%, or an optimal theoretical value ± 20%, subject to that a corresponding technical effect can be achieved in practice.

This application provides an electronic device. The electronic device may be a laptop computer, a notebook computer, or another similar portable computing device. In embodiments of this application, an example in which an electronic device is a notebook computer is used for description.

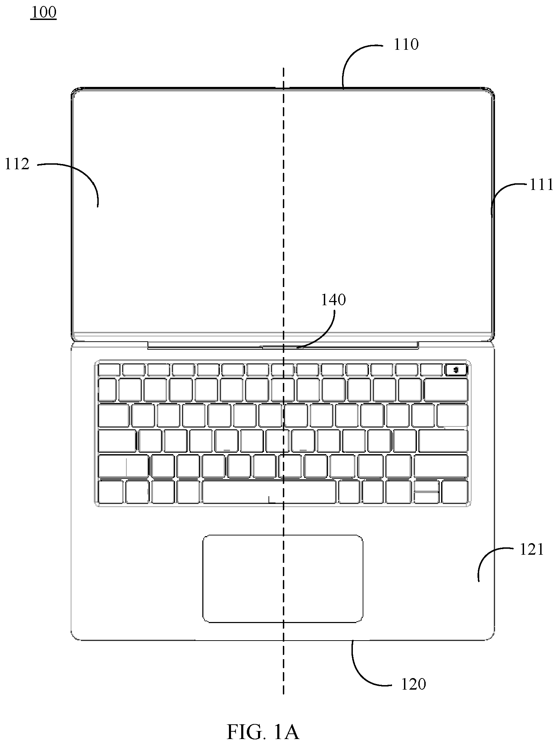

Refer to FIG. 1A. FIG. 1A is a schematic diagram of an overall structure of an electronic device according to an embodiment of this application. As shown in FIG. 1A, the electronic device 100 includes a first part 110 on a display side and a second part 120 on a host side. The first part 110 includes a first housing 111, and a display screen 112 disposed in the first housing 111. The second part 120 includes a second housing 121, a keyboard and a touch panel that are disposed on an upper side of the second housing 121, and various electronic elements such as a mainboard, a processor, a memory, and a speaker that are disposed inside the second housing 121. The first part 110 and the second part 120 are connected with each other through a rotating assembly such as a rotating shaft or a hinge, so that the first part 110 and the second part 120 can rotate relative to each other, and the notebook computer can be unfolded or folded.

The rotating shaft of the notebook computer is generally disposed at two ends of connection sides of the first housing 111 and the second housing 121. For aesthetics of the notebook computer, a rotating shaft cover 130 is generally disposed outside the rotating shaft, and the rotating shaft is disposed inside the rotating shaft cover 130. The rotating shaft occupies a part of space inside the rotating shaft cover 130, and a remaining part of space inside the rotating shaft cover 130 may be used for cabling or other designs. In this embodiment of this application, the rotating shaft cover 130 is connected to the first part 110, that is, the rotating shaft cover 130 may be disposed on the connection sides where the first housing 111 and the second housing 121 are connected. When the first part 110 rotates relative to the second part 120, the rotating shaft cover 130 also rotates relative to the second part 120.

In this embodiment of this application, when the first part 110 and the second part 120 rotate relative to each other, a rotation angle between the first part 110 and the second part 120 may be 0° to 180°. When an included angle between the first part 110 and the second part 120 is 0°, the first part 110 closely contacts the second part 120. In this case, it may be referred to that the electronic device 100 is in a folded state. When the included angle between the first part 110 and the second part 120 is 180°, the first part 110 and the second part 120 are almost in a same plane. In this case, it may be referred to that the electronic device 100 is in an unfolded state. Certainly, in a general case, the folded state and the unfolded state of the electronic device 100 mean that the first part 110 and the second part 120 are within an angle range. For example, when the included angle between the first part 110 and the second part 120 is 0° to 45°, it may be referred to that the electronic device 100 is in the folded state. When the included angle between the first part 110 and the second part 120 is 45° to 180°, it may be referred to that the electronic device 100 is in the unfolded state. It should be noted that an unfolding process and a folding process of the electronic device 100 are a dynamic process, a process in which the included angle between the first part 110 and the second part 120 becomes larger may be referred to as the unfolding process, and a process in which the included angle between the first part 110 and the second part 120 becomes smaller may be referred to as the folding process.

In some electronic devices, data transmission needs to be performed between the first part 110 and the second part 120 of the electronic device. For example, after data on the host side of the notebook computer is processed, the data needs to be transmitted to the display screen 112 in the first part 110 on the display side for display. Therefore, an electrical connection needs to be performed between the first part 110 and the second part 120. As shown in FIG. 1A, a flexible printed circuit 140 is disposed between the first part 110 and the second part 120. One end of the flexible printed circuit 140 may enter the first part 110 from a middle position of a side that is of the first part 110 and that is close to the second part 120. The other end of the flexible printed circuit 140 may enter the second part 120 from a middle position of a side that is of the second part 120 and that is close to the first part 110.

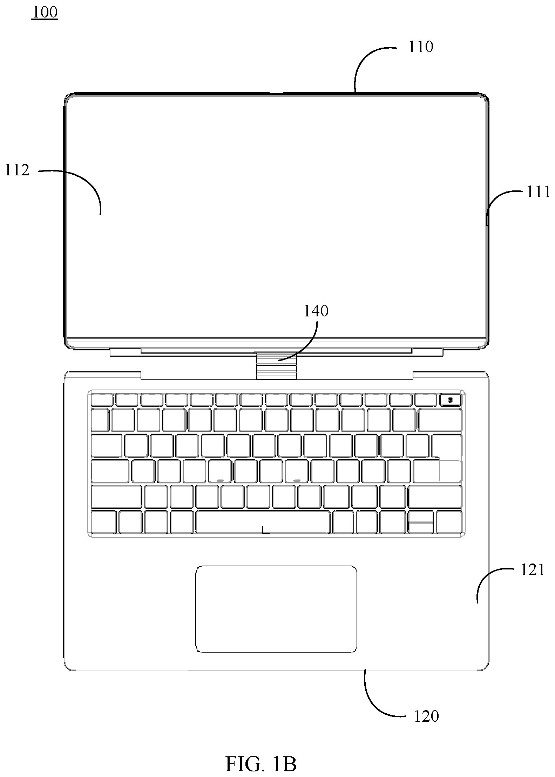

In addition, reference may also be made to FIG. 1B. FIG. 1B is an exploded view of an electronic device according to an embodiment of this application. FIG. 1B mainly shows an approximate location at which the flexible printed circuit 140 is connected to the first part 110 and the second part 120. As shown in FIG. 1B, a connecting hole may be disposed on the first part 110 and a connecting hole may be disposed on the second part 120 at middle positions of a side where the first part 110 and the second part 120 are connected to each other. One end of the flexible printed circuit 140 is threaded into the first part 110 from the connecting hole of the first part 110, and the other end of the flexible printed circuit 140 is threaded into the second part 120 from the connecting hole of the second part 120.

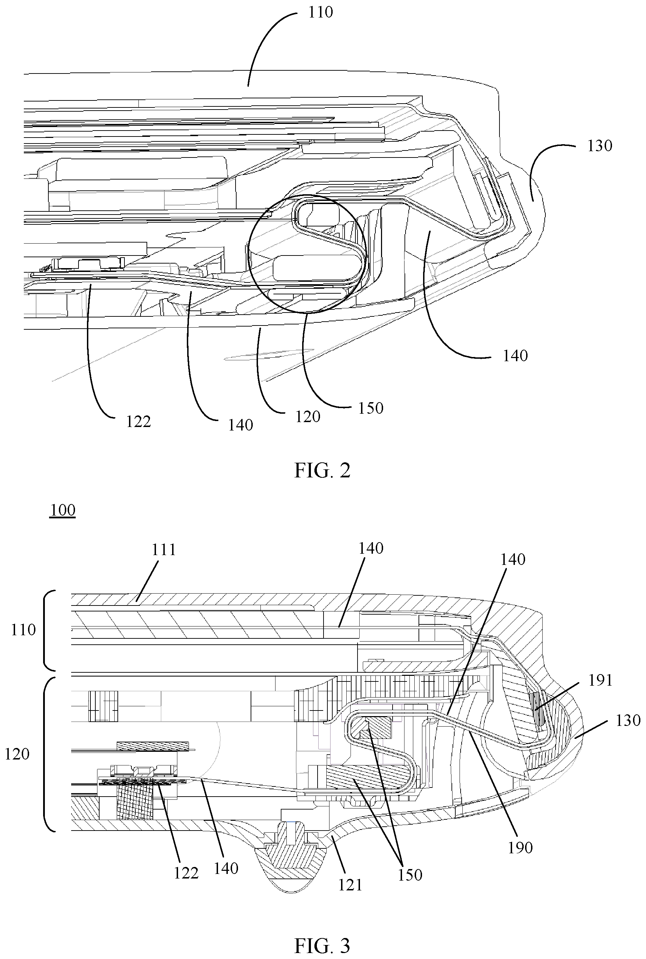

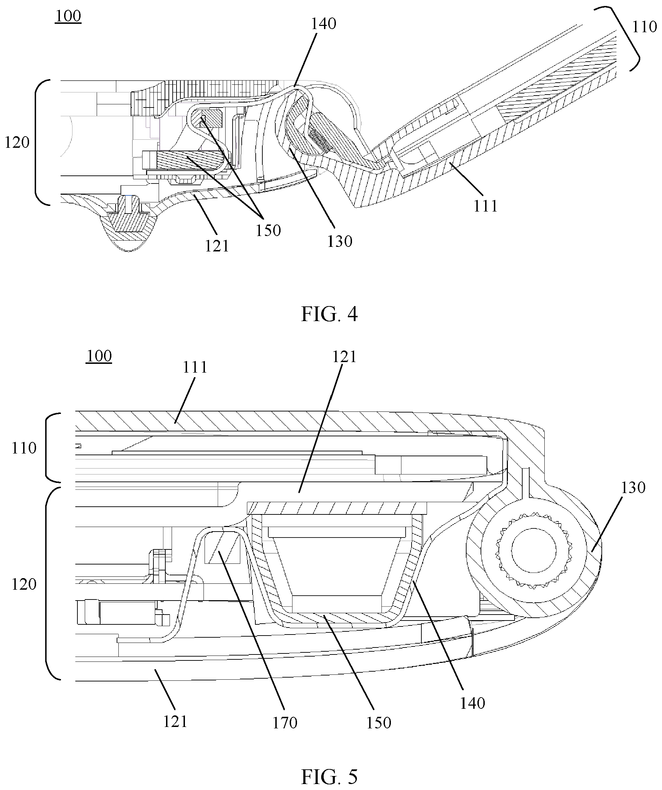

In this embodiment of this application, the first part 110 includes a first electronic element, the second part 120 includes a second electronic element 122, and the first electronic element and the second electronic element 122 are electrically connected to each other through the flexible printed circuit 140. Refer to FIG. 2, FIG. 3, and FIG. 4. FIG. 2 is a schematic diagram of a three-dimensional structure of a partial structure of an electronic device according to an embodiment of this application, FIG. 3 is a partial sectional view of an electronic device according to an embodiment of this application, and FIG. 4 is another partial sectional view of an electronic device according to an embodiment of this application. FIG. 2 is a schematic diagram of a three-dimensional structure when the first part 110 and the second part 120 in the electronic device are in the folded state. FIG. 2 mainly shows a connection relationship between the flexible printed circuit 140 and both the first part 110 and the second part 120, an approximate location of an elastic bracket 150, and a connection relationship and a cabling shape between the flexible printed circuit 140 and the elastic bracket 150 in the electronic device. FIG. 3 and FIG. 4 may both be sectional views obtained after cutting along the dashed line in FIG. 1A and in a direction perpendicular to the display screen. A difference between FIG. 3 and FIG. 4 lies in that the electronic device in FIG. 3 is in the folded state. In this case, the included angle between the first part 110 and the second part 120 is approximately 0°. The electronic device in FIG. 4 is in the unfolded state. In this case, the included angle between the first part 110 and the second part 120 is approximately 150°.

As shown in FIG. 2, FIG. 3, and FIG. 4, the rotating shaft cover 130 is fixedly connected to the first housing 111 of the first part 110, and an opening is disposed on each of the connection side of the first housing 111, the rotating shaft cover 130, and the connection side of the second housing 121, so that one end of the flexible printed circuit 140 may enter the first housing 111 through the opening in the first housing 111 to electrically connect to the first electronic element (not shown in FIG. 3 and FIG. 4), and the other end of the flexible printed circuit 140 passes through the rotating shaft cover 130, and enters the second housing 121 from through holes 161 in the second housing 121 to electrically connect to the second electronic element 122 (not shown in FIG. 4).

In this embodiment of this application, the flexible printed circuit 140 needs to pass through the rotating shaft cover 130 to connect to the first electronic element in the first part 110 and the second electronic element 122 in the second part 120. Because the rotating shaft cover 130 rotates with the first part 110, to reduce pulling on the flexible printed circuit 140 when the rotating shaft cover 130 rotates, the flexible printed circuit 140 preferably passes through an axial center of the rotating shaft cover 130 when passing through the rotating shaft cover 130. In this way, a length of the flexible printed circuit 140 inside the rotating shaft cover 130 can be reduced, and a pulling length of the flexible printed circuit 140 when the rotating shaft cover 130 rotates can be reduced. In actual application, it is difficult to thread the flexible printed circuit 140 out of the axial center of the rotating shaft cover 130, and an actual thread-out position may have a deviation from the axial center. For example, the deviation from the axial center is approximately 1 mm.

It should be noted that in this embodiment of this application, as shown in FIG. 3, due to a shape setting of the rotating shaft cover 130, when the included angle between the first part 110 and the second part 120 is 0°, the rotating shaft cover 130 is not in contact with the flexible printed circuit 140. After the first part 110 rotates relative to the second part 120 by an angle, the rotating shaft cover 130 starts to be in contact with the flexible printed circuit 140. The angle may be referred to as a threshold angle. When the first part 110 continues to rotate after rotating relative to the second part 120 by the threshold angle, the rotating shaft cover 130 pulls out the flexible printed circuit 140 in the second part 120. The threshold angle in FIG. 3 is approximately 120°. That is, in the electronic device shown in FIG. 3, when an angle by which the first part 110 rotates relative to the second part 120 is greater than 120°, the rotating shaft cover 130 pulls out the flexible printed circuit 140 in the second part 120. In FIG. 4, an angle by which the first part 110 rotates relative to the second part 120 is approximately 150°. It can be seen that, in this case, the rotating shaft cover 130 is in contact with the flexible printed circuit 140, and pulls the flexible printed circuit 140 out of the second part 120. In this embodiment of this application, a scenario in which the first part 110 rotates relative to the second part 120 and the flexible printed circuit 140 is pulled out of the second part 120 refers to, for example, relative rotation between the first part 110 and the second part 120 when a rotation included angle between the first part 110 and the second part 120 is rotated from 120° to 180°.

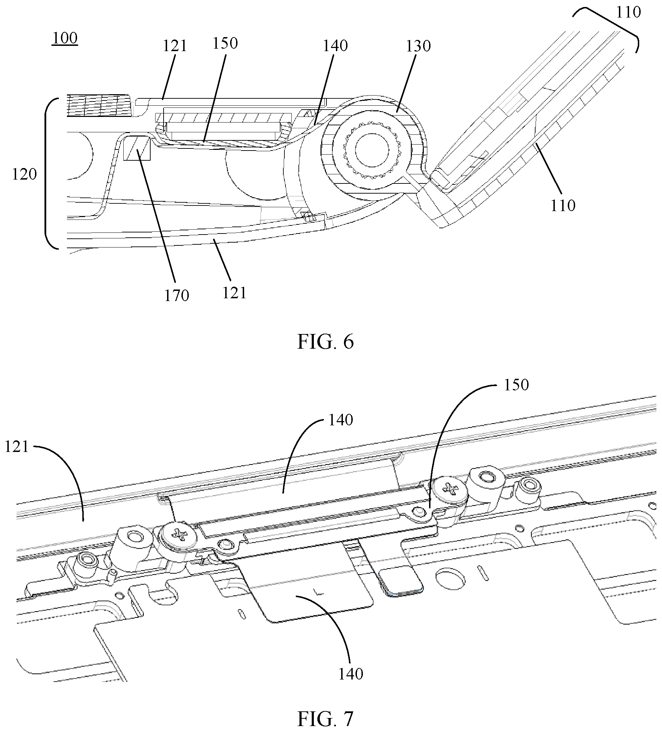

In another embodiment of this application, reference is made to FIG. 5 and FIG. 6. FIG. 5 is a partial sectional view of another electronic device according to an embodiment of this application, and FIG. 6 is another partial sectional view of another electronic device according to an embodiment of this application. FIG. 5 and FIG. 6 may both be sectional views obtained after cutting along the dashed line in FIG. 1A and in a direction perpendicular to the display screen. The electronic device in FIG. 5 is in the folded state. In this case, the included angle between the first part 110 and the second part 120 is approximately 0°. The electronic device in FIG. 6 is in the unfolded state. In this case, the included angle between the first part 110 and the second part 120 is approximately 150°.

As shown in FIG. 5 and FIG. 6, the rotating shaft cover 130 is fixedly connected to the first housing 111 of the first part 110, and an opening is disposed on each of the connection side of the first housing 111 and the connection side of the second housing 121. One end of the flexible printed circuit 140 enters the first housing 111 through the opening in the first housing 111 to electrically connect to the first electronic device, and the other end enters the second housing 121 through the opening in the second housing 121 to electrically connect to the second electronic device. In this embodiment of this application, the flexible printed circuit 140 does not pass through the rotating shaft cover 130, but passes out of the opening in the first housing 111 and then is fixedly connected to the rotating shaft cover 130.

In the electronic devices shown in FIG. 5 and FIG. 6, because the flexible printed circuit 140 is fixedly connected to the rotating shaft cover 130, the threshold angle of the rotation angle between the first part 110 and the second part 120 is 0. That is, when the first part 110 and the second part 120 rotate relative to each other from an included angle of 0°, the rotating shaft cover 130 pulls out the flexible printed circuit 140 in the second part 120. That is, the technical solution described in this embodiment of this application may also be applied to a scenario in which the rotation included angle between the first part 110 and the second part 120 is rotated from 0° to 180°.

It can be learned from the change from FIG. 5 to FIG. 6 that, because the electronic device is unfolded, the flexible printed circuit 140 in the second part 120 is pulled out at this time, and the elastic bracket 150 disposed in the second part 120 of the electronic device is compressed and deformed. On the contrary, it can be learned from the change from FIG. 6 to FIG. 5 that, because the electronic device is folded and no external force pulls the flexible printed circuit 140 in the second part 120, the elastic bracket 150 restores to an original shape, to pull back the pulled-out flexible printed circuit 140 in the second part 120. It should be noted that the structure of the elastic bracket 150 in FIG. 5 is different from that of the elastic bracket 150 in FIG. 3, but functions of the elastic brackets are the same.

To ensure that the electronic device can be smoothly unfolded and folded, the length of the flexible printed circuit 140 is generally set to be relatively long, so that the flexible printed circuit 140 keeps a slack state. During unfolding of the electronic device, a part of the flexible printed circuit 140 in the second part 120 is pulled out. During folding of the electronic device, if the pulled-out part of the flexible printed circuit 140 cannot be retracted into the second part 120, the extended flexible printed circuit 140 is prone to arching during unfolding and folding due to length changes, and may even form severe compression, leading to fracture and failure of the flexible printed circuit 140.

It should be noted that the flexible printed circuit 140 may be any suitable type of cable, including a flexible cable, a flexible printed circuit board, or any suitable mechanism for transmitting electrical signals between the first electronic element and the second electronic element 122. In some embodiments, the flexible printed circuit 140 is a tape single-layer flexible cable. Certainly, a multi-layer flexible cable may alternatively be used. A single-layer flexible cable may be used for reducing a stack height (that is, a vertical thickness) of the flexible printed circuit 140. In some embodiments, the flexible printed circuit 140 may alternatively use a flexible printed circuit board.

To avoid a case in which the flexible printed circuit 140 is pulled out of the second part 120 but cannot be retracted during unfolding and folding of the electronic device, in embodiments of this application, reference is made to FIG. 7, and FIG. 7 is a schematic diagram of a connection structure between the elastic bracket and the second part in the electronic device according to an embodiment of this application. As shown in FIG. 7, the elastic bracket 150 is disposed in the second part 120 of the electronic device. The elastic bracket 150 is fixedly connected to the second housing 121 of the second part 120. The elastic bracket 150 may be connected to the second housing 121 of the second part 120 in a manner such as gluing or screwing. In this embodiment of this application, as shown in FIG. 7, two ends of the elastic bracket 150 each are fastened to the second housing 121 by using screws. The flexible printed circuit 140 is wrapped around the elastic bracket 150.

It can be learned from the change from FIG. 3 to FIG. 4 that, during unfolding of the electronic device, the included angle between the first part 110 and the second part 120 becomes larger, the rotating shaft cover 130 on the first part 110 rotates with the first part 110, and after the rotating shaft cover 130 is in contact with the flexible printed circuit 140, the flexible printed circuit 140 is pulled out from the second part 120 to the first part 110. Because the flexible printed circuit 140 is wrapped around the elastic bracket 150, the flexible printed circuit 140 may drive the elastic bracket 150 to deform.

It can be learned from the change from FIG. 4 to FIG. 3 that, during folding of the electronic device, the included angle between the first part 110 and the second part 120 becomes smaller, and the rotating shaft cover 130 on the first part 110 no longer generates an outward pulling force on the flexible printed circuit 140. In this case, the elastic bracket 150 restores to the original shape, and drives the flexible printed circuit 140 wrapped around the elastic bracket 150 to move towards the inside of the second part 120, thereby retracting the extended flexible printed circuit 140 into the second part 120.

It should be noted that in this embodiment of this application, that the flexible printed circuit 140 is wrapped around the elastic bracket 150 means that the flexible printed circuit 140 forms at least one bending area in the second part 120, and the elastic bracket 150 is located in the bending area. One end that is of the flexible printed circuit 140 and that is located in the second part 120 is fastened, and when the other end of the flexible printed circuit 140 is pulled, the bending area that is of the flexible printed circuit 140 and that is in contact with an elastic part of the elastic bracket 150 moves toward a force-bearing direction, thereby driving (the elastic part of) the elastic bracket 150 to deform.

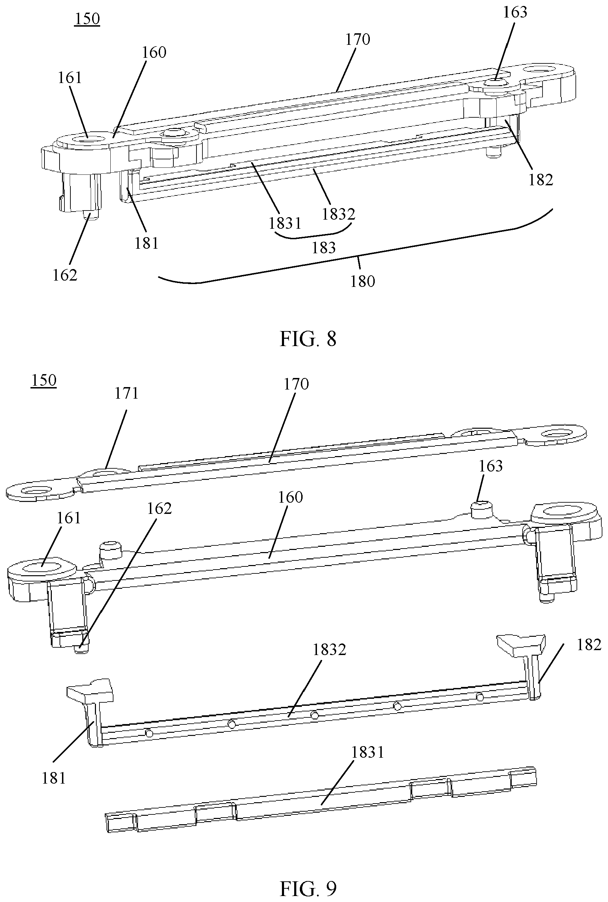

In an embodiment of this application, for the elastic bracket 150, refer to FIG. 8 and FIG. 9. FIG. 8 is a schematic diagram of a structure of an elastic bracket 150 in an electronic device according to an embodiment of this application, and FIG. 9 is an exploded view of an elastic bracket 150 in an electronic device according to an embodiment of this application. As shown in FIG. 8 and FIG. 9, the elastic bracket 150 includes a bracket body 160, a compression plate 170, and an elastic assembly 180. The compression plate 170 is connected to one side of the bracket body 160, and the elastic assembly 180 is connected to the other side of the bracket body 160. The compression plate 170 is mainly configured to fasten the flexible printed circuit 140 to the bracket body 160. The elastic assembly 180 may deform relative to the bracket body 160, to provide a retracting force for the pulled-out flexible printed circuit 140. The compression plate 170 and the elastic assembly 180 are respectively disposed on two sides of the elastic bracket 150, to facilitate wrapping the flexible printed circuit 140 around the elastic bracket 150.

The elastic bracket 150 is fixedly connected to the second part 120. Therefore, in this embodiment of this application, the bracket body 160 may be fixedly connected to the second housing 121 of the second part 120. Specifically, through holes 161 may be disposed at two ends of the bracket body 160, and then the bracket body 160 is fastened to the second housing 121 of the second part 120 by using screws. For example, the bracket body 160 is fastened, by using screws, to a side, on which a keyboard is disposed, of the second housing 121 (which may also be referred to as a C housing of the notebook computer). Certainly, another manner may alternatively be used for fastening. A specific fastening manner of the elastic bracket 150 is not limited in this embodiment of this application.

In addition, as shown in FIG. 9, a fastening post 162 may be further disposed on the back of the bracket body 160. When a cover fabric 190 needs to be disposed in the electronic device, the cover fabric 190 may be fixedly connected to the fastening post 162 on the back of the bracket body 160.

As shown in FIG. 8 and FIG. 9, the elastic assembly 180 includes a cross beam 183, a first connecting member 181, and a second connecting member 182. Two ends of the cross beam 183 are fixedly connected to the bracket body 160 through the first connecting member 181 and the second connecting member 182. A particular gap exists between the cross beam 183 and the bracket body 160.

In an embodiment of this application, as shown in FIG. 9, the cross beam 183, the first connecting member 181, and the second connecting member 182 may be integrally formed. A connecting head is disposed at the other end of each of the first connecting member 181 and the second connecting member 182. Connecting holes or connecting troughs (not shown in the figure) corresponding to the connecting heads may be disposed at two ends of the bracket body 160, to implement a fixed connection between the first connecting member 181 and the bracket body 160, and implement a fixed connection between the second connecting member 182 and the bracket body 160.

When the flexible printed circuit 140 is wrapped around the elastic bracket 150, a first end of the flexible printed circuit 140 is passed through a gap between the compression plate 170 and the bracket body 160, and the first end is electrically connected to the second electronic element 122 in the second part 120. Then, the compression plate 170 is locked, and the flexible printed circuit 140 is fastened to the bracket body 160 through the compression plate 170. It may also be understood that the flexible printed circuit 140 is placed on a side of the bracket body 160 where the compression plate 170 is disposed, then the compression plate 170 is placed on the flexible printed circuit 140 to make the flexible printed circuit 140 be located between the compression plate 170 and the bracket body 160, and then the compression plate 170 is fastened to the bracket body 160 to make the flexible printed circuit 140 be fastened between the compression plate 170 and the bracket body 160. The compression plate 170 may be fastened to the bracket body 160 by using screws.

Specifically, regarding a connection between the compression plate 170 and the bracket body 160, refer to FIG. 8 and FIG. 9. As shown in FIG. 9, at least two positioning posts 163 are disposed on a side that is of the bracket body 160 and that is in contact with the compression plate 170, and positioning holes 171 corresponding to the positioning posts 163 are disposed on the compression plate 170. By means of cooperation of the positioning posts 163 and the positioning holes 171, the compression plate 170 is easily mounted on the bracket body 160. In addition, two fastening holes are disposed at two ends of the compression plate 170, and positions of the fastening holes correspond to positions of the two through holes 161 on the bracket body 160. When the elastic bracket 150 is fixedly mounted to the second housing 121, the elastic bracket 150 may be integrally fixedly connected to the second housing 121 by using screws that respectively pass through the through holes 161 on the bracket body 160 and the fastening holes on the compression plate 170. In addition, a function of compressing the flexible printed circuit 140 located between the compression plate 170 and the bracket body 160 is implemented.

After the first end of the flexible printed circuit 140 is compressed, a second end of the flexible printed circuit 140 is passed through a gap between the bracket body 160 and the flexible printed circuit 140, and the flexible printed circuit 140 is wrapped around the cross beam 183. The second end of the flexible printed circuit 140 passes out of the second housing 121 of the second part 120, and is electrically connected to the first electronic element in the first part 110. As shown in FIG. 3 and FIG. 4, a cabling shape of the flexible printed circuit 140 on the elastic bracket 150 is an "S" shape or a "Z" shape. That is, the flexible printed circuit 140 forms two bending areas on the elastic bracket 150. For ease of description, the two bending areas are referred to as a first bending area and a second bending area. The first bending area is in contact with a side surface of the bracket body 160 of the elastic bracket 150, and the second bending area is in contact with a side surface of the cross beam 183 in the elastic assembly 180.

In this embodiment of this application, the flexible printed circuit 140 is fastened to the bracket body 160 through the compression plate 170, to prevent a connection between the flexible printed circuit 140 and the second electronic element 122 from being loosened by pulling when the first part 110 rotates relative to the second part 120 and the flexible printed circuit 140 is pulled to move toward the first part 110. In addition, when one end of the flexible printed circuit 140 is fastened, and the other end of the flexible printed circuit 140 is pulled, the elastic assembly 180 in the bending area may be deformed, so that during folding, the elastic assembly 180 may retract the flexible printed circuit 140 into the second part 120.

In the elastic bracket 150 shown in FIG. 8 and FIG. 9, the first connecting member 181 and the second connecting member 182 are both elastic.

During unfolding of the electronic device, the rotating shaft cover 130 on the first part 110 drives the flexible printed circuit 140 to move, so that the flexible printed circuit 140 is pulled out of the second part 120. Because the flexible printed circuit 140 is wrapped around the cross beam 183, the second bending area of the flexible printed circuit 140 drives the cross beam 183 to move toward the first part 110. Because the first connecting member 181 and the second connecting member 182 are both elastic, after the cross beam 183 is pulled, the first connecting member 181 and the second connecting member 182 are driven to deform.

During folding of the electronic device, because the rotating shaft cover 130 on the first part 110 no longer generates a pulling force on the flexible printed circuit 140, when no external force is applied to the flexible printed circuit, the first connecting member 181 and the second connecting member 182 restore to the original shapes, and the cross beam 183 is driven to move away from the first part 110. The cross beam 183 located in the second bending area drives the flexible printed circuit 140 to move, and retracts the extended flexible printed circuit 140 into the second part 120.

It can be learned from the foregoing descriptions that the elastic bracket 150 shown in FIG. 8 and FIG. 9 provides an elastic force mainly through the first connecting member 181 and the second connecting member 182, to retract the pulled-out flexible printed circuit 140 into the second part 120.

The flexible printed circuit 140 is mainly configured to transmit data, and in a process of pulling out and pulling back the flexible printed circuit 140, the flexible printed circuit may form friction with the cross beam 183. To avoid affecting the quality of the flexible printed circuit 140 in a long-term friction process, in this embodiment of this application, as shown in FIG. 9, the cross beam 183 includes a first support beam 1831 and a second support beam 1832. The first support beam 1831 and the second support beam 1832 are in close contact with each other, to form the cross beam 183 together. The first support beam 1831 is a rigid beam, and the second support beam 1832 is a flexible beam. When the flexible printed circuit 140 is wrapped around the cross beam 183, the flexible printed circuit 140 is in contact with the second support beam 1832. That is, the second bending area of the flexible printed circuit 140 is in contact with the second support beam 1832.

In this embodiment, as shown in FIG. 9, the first connecting member 181, the second connecting member 182, and the second support beam 1832 may be integrally formed. Because the first connecting member 181 and the second connecting member 182 need to be elastic, and the second support beam 1832 is a flexible beam, the first connecting member 181, the second connecting member 182, and the second support beam 1832 may be made of silicone rubber. Certainly, the first connecting member 181, the second connecting member 182, and the second support beam 1832 may alternatively be made of another elastic and flexible material. In addition, if the first connecting member 181, the second connecting member 182, and the second support beam 1832 are separately made, the first connecting member 181 and the second connecting member 182 may be made of an elastic material, the second support beam 1832 may be made of a flexible material, and then the second support beam 1832 is connected to the first connecting member 181 and the second connecting member 182.

The first support beam 1831 may be manufactured by using an injection molding process. However, the first support beam 1831 needs to be made of a material having a particular level of hardness, to ensure that the first support beam 1831 has a particular level of strength. The injection molding process may also be used for the second support beam 1832. When the cross beam 183 is manufactured, a two-color injection molding process may be used to manufacture the first support beam 1831 and the second support beam 1832 at the same time. Two-color injection molding refers to a forming process in which two different materials are injected into a same set of molds, so that an injected part is formed by two materials. Some two materials are different in color, and some are different in hardness, thereby improving performance such as aesthetics and assembly of a product.

Because the second support beam 1832 is a flexible beam, the second support beam 1832 is in contact with the flexible printed circuit 140, which can implement soft contact between the flexible printed circuit 140 and the cross beam 183, thereby avoiding a loss of the flexible printed circuit 140 caused by long-term friction. In addition, the first support beam 1831 is disposed as a rigid beam, which may provide a strength guarantee for the cross beam 183, so that the cross beam 183 can be kept straight. Therefore, when the flexible printed circuit 140 drives the cross beam 183 to move, the cross beam 183 is prevented from being pulled and bent into a "crescent" shape, which deforms the cross beam 183 and causes an excessively large local force on the flexible printed circuit 140. In addition, deformation of the first connecting member 181 and deformation of the second connecting member 182 are affected.

In an embodiment of this application, to ensure that after the flexible printed circuit 140 is wrapped around the elastic bracket 150, the flexible printed circuit 140 does not bend at an excessively small angle which affects data transmission of the flexible printed circuit 140, when the elastic bracket 150 is disposed, a surface that is of the elastic bracket 150 and that is in contact with the flexible printed circuit 140 needs to be disposed as smooth as possible.

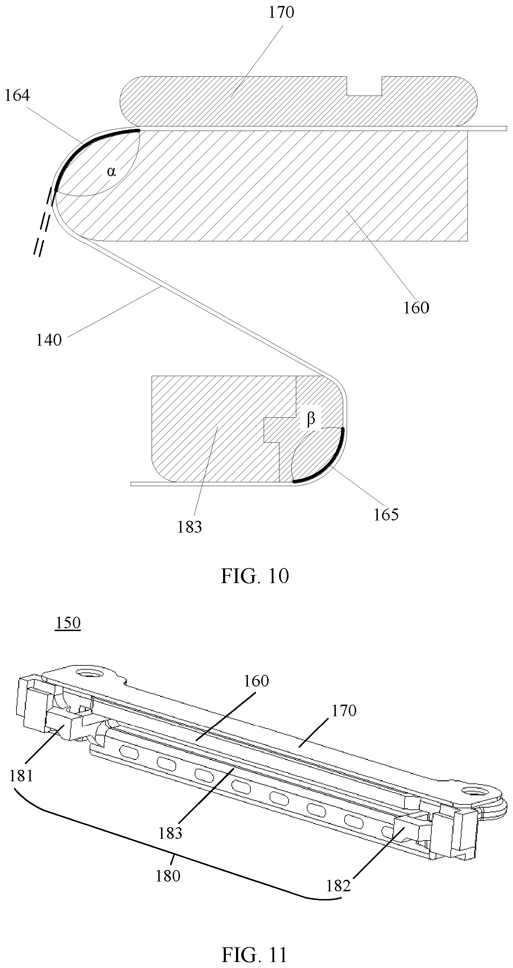

Refer to FIG. 10. FIG. 10 is a schematic diagram of a partial cross section of the elastic bracket 150 shown in FIG. 8. As shown in FIG. 10, a surface that is of the bracket body 160 and that is in contact with the first bending area of the flexible printed circuit 140 is a first contact surface 164, and a surface that is of the cross beam 183 and that is in contact with the flexible printed circuit 140 is a second contact surface 165. When the first contact surface 164 and the second contact surface 165 are disposed, the first contact surface 164 and the second contact surface 165 may be disposed as arc surfaces. To ensure that the first contact surface 164 and the second contact surface 165 are as smooth as possible, central angles corresponding to the first contact surface 164 and the second contact surface 165 are less than 90°. Smaller central angles corresponding to the first contact surface 164 and the second contact surface 165 indicate a smoother first contact surface 164 and a smoother second contact surface 165.

It should be noted that in this embodiment of this application, when the first contact surface 164 and the second contact surface 165 are standard arc surfaces, smoothness of the first contact surface 164 and the second contact surface 165 may be described by using sizes of the central angles. The first contact surface 164 and the second contact surface 165 may alternatively be similar arc surfaces disposed with reference to the foregoing arc surfaces. Correspondingly, the two contact surfaces should be disposed as gentle as possible, so that after the flexible printed circuit 140 is in contact with a corresponding contact surface, a bending angle of the flexible printed circuit 140 on this contact surface is greater than 90°. Certainly, the first contact surface 164 and the second contact surface 165 may alternatively be disposed to be arc surfaces of other shapes, for example, elliptic surfaces, or some non-standard arc surfaces. However, it needs to be ensured that the first contact surface 164 and the second contact surface 165 are as smooth as possible. Specifically, it may be a standard that a bending angle α of the flexible printed circuit 140 is greater than 90° after the flexible printed circuit 140 is in contact with the first contact surface 164, and a standard that a bending angle β of the flexible printed circuit 140 is greater than 90° after the flexible printed circuit 140 is in contact with the second contact surface 165. The foregoing bending angle α and bending angle β may be understood as included angles between two positions and the flexible printed circuit 140, where at the two positions, the flexible printed circuit 140 is respectively tangent to end surfaces of contact surfaces after the flexible printed circuit 140 is in close contact with corresponding contact surfaces.

In this way, the flexible printed circuit 140 is not greatly bent when being wrapped around the elastic bracket 150, thereby ensuring smooth cabling of the flexible printed circuit 140, and avoiding affecting data transmission of the flexible printed circuit 140 due to excessively large bending. It should be noted that, in one bending area mentioned in this embodiment of this application, the flexible printed circuit 140 may have two bending parts. For example, there are two bending parts in the first bending area of the flexible printed circuit 140 shown in FIG. 10. One bending part is generated on the first contact surface 164, and the other bending part is generated when the flexible printed circuit leaves the first contact surface 164 to contact with the cross beam 183. There are also two bending parts in the second bending area of the flexible printed circuit 140 shown in FIG. 10. One bending part is generated on the second contact surface 165, and the other bending part is generated when the flexible printed circuit 140 is just in contact with the cross beam 183 and before being in contact with the second contact surface 165. At each of the foregoing bending parts, the bending angle of the flexible printed circuit 140 is greater than 90°.

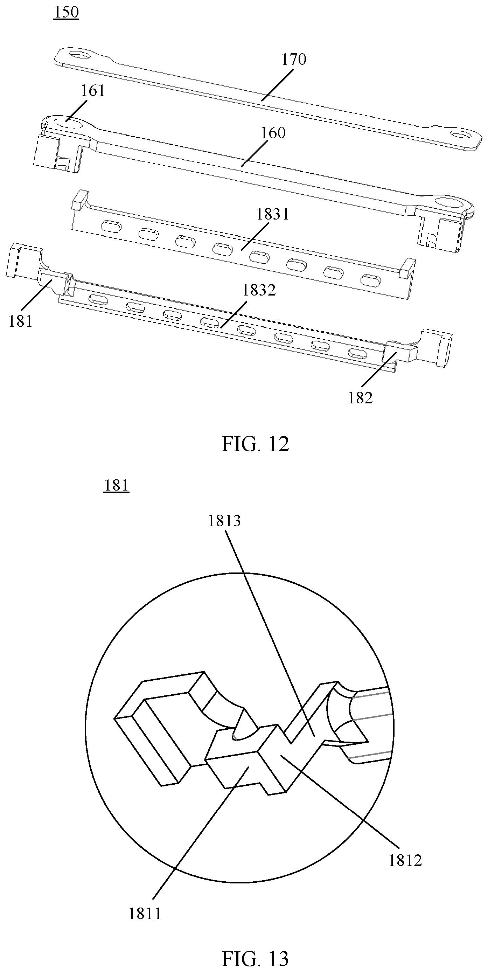

Another elastic bracket 150 is further provided in another embodiment of this application. Refer to FIG. 11 and FIG. 12. FIG. 11 is a schematic diagram of a structure of another elastic bracket 150 in an electronic device according to an embodiment of this application, and FIG. 12 is an exploded view of another elastic bracket 150 in an electronic device according to an embodiment of this application. As shown in FIG. 11 and FIG. 12, the elastic bracket 150 also includes a bracket body 160, a compression plate 170, and an elastic assembly 180. The compression plate 170 is connected to one side of the bracket body 160, and the elastic assembly 180 is connected to the other side of the bracket body 160. The structure of the elastic bracket 150 shown in FIG. 11 is similar to that of the elastic bracket 150 shown in FIG. 8, and a difference lies in that the structure of the elastic assembly 180 is different. It should be noted that, a further difference lies in that, in the structure shown in FIG. 11, the bracket body 160 is not provided with positioning posts 163, and the compression plate 170 is not provided with positioning holes 171. The positioning posts 163 and the positioning holes 171 are disposed only for ease of mounting the compression plate 170 on the bracket body 160, and do not affect the essence of connection between the compression plate and the bracket body. Certainly, the positioning posts 163 and the positioning holes 171 may also be disposed in the structures shown in FIG. 11 and FIG. 12 with reference to the structure shown in FIG. 8. For a connection between the compression plate 170 and the bracket body 160 in FIG. 11 and FIG. 12, reference may still be made to the connection manner between the compression plate 170 and the bracket body 160 in the elastic bracket 150 described in FIG. 8 and FIG. 9, and details are not described herein again.

As shown in FIG. 11 and FIG. 12, the elastic assembly 180 includes a cross beam 183, a first connecting member 181, and a second connecting member 182. Two ends of the cross beam 183 are fixedly connected to the bracket body 160 through the first connecting member 181 and the second connecting member 182. A difference lies in that a structure of the first connecting member 181 shown in FIG. 11 and FIG. 12 is different from that of the first connecting member 181 in FIG. 8 and FIG. 9, and a structure of the second connecting member 182 shown in FIG. 11 and FIG. 12 is different from that of the second connecting member 182 in FIG. 8 and FIG. 9.

In an embodiment of this application, in the structure shown in FIG. 11, the structure of the first connecting member 181 and the structure of the second connecting member 182 are the same, and the first connecting member and the second connecting member are symmetrically disposed at two ends of the cross beam 183. The following specifically describes differences between the first connecting member 181 in the structure shown in FIG. 11 and the first connecting member 181 in the structure shown in FIG. 8 by using the structure of the first connecting member 181 as an example.

Refer to FIG. 13. FIG. 13 is a schematic diagram of a structure of the first connecting member 181 in the elastic bracket 150 shown in FIG. 11. As shown in FIG. 13, the first connecting member 181 includes a first cross bar 1811, a first vertical bar 1812, and a second cross bar 1813. Two ends of the first vertical bar 1812 are respectively connected to the first cross bar 1811 and the second cross bar 1813, a connecting head is disposed at the other end of the first cross bar 1811, and the first cross bar 1811 is fixedly connected to the bracket body 160 through the connecting head. The other end of the second cross bar 1813 is fixedly connected to the cross beam 183. The first vertical bar 1812 is perpendicular to both the first cross bar 1811 and the second cross bar 1813, and the first cross bar 1811 is also perpendicular to the second cross bar 1813.

The first cross bar 1811, the first vertical bar 1812, and the second cross bar 1813 are elastic. By means of the foregoing disposition, when the flexible printed circuit 140 drives the cross beam 183 to move, the cross beam 183 drives the first cross bar 1811, the first vertical bar 1812, and the second cross bar 1813 to deform together. Compared with the first connecting member 181 shown in FIG. 8, when the first connecting member 181 formed by the first cross bar 1811, the first vertical bar 1812, and the second cross bar 1813 is deformed, the amount of deformation of the first connecting member may be larger, and the deformation occurs more easily. It should be noted that FIG. 11 and FIG. 8 only show different shapes of the first connecting member 181, and a person skilled in the art may also dispose the first connecting member 181/the second connecting member 182 to other shapes according to requirements.

Still refer to FIG. 11 and FIG. 12. Except the foregoing differences, the structure of the elastic bracket 150 shown in FIG. 11 and FIG. 12 is the same as that of the elastic bracket 150 in FIG. 8 and FIG. 9. For example, in the elastic bracket 150 shown in FIG. 12, the cross beam 183 also includes a first support beam 1831 and a second support beam 1832. The first support beam 1831 is a rigid beam, and the second support beam 1832 is a flexible beam. When the flexible printed circuit 140 is wrapped around the cross beam 183, the flexible printed circuit 140 is in contact with the second support beam 1832. When the flexible printed circuit 140 is wrapped around the elastic bracket 150 shown in FIG. 11, a cabling shape of the flexible printed circuit 140 on the elastic bracket 150 is also an "S" shape or a "Z" shape. When the elastic bracket 150 shown in FIG. 11 and FIG. 12 is in contact with the flexible printed circuit 140, a first contact surface 164 and a second contact surface 165 are also included. For disposition of the first contact surface 164 and the second contact surface 165, refer to related descriptions in the foregoing embodiments, and details are not described herein again.

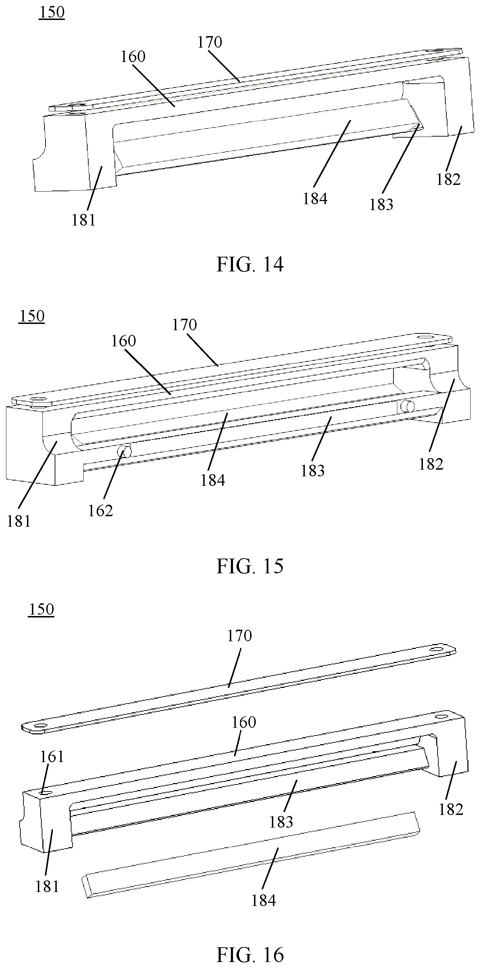

Still another elastic bracket 150 is further provided in an embodiment of this application. Refer to FIG. 14, FIG. 15, and FIG. 16. FIG. 14 is a schematic diagram of a front structure of still another elastic bracket 150 in an electronic device according to an embodiment of this application, FIG. 15 is a schematic diagram of a rear structure of still another elastic bracket 150 in an electronic device according to an embodiment of this application, and FIG. 16 is an exploded view of still another elastic bracket 150 in an electronic device according to an embodiment of this application.

As shown in FIG. 14 to FIG. 16, the elastic bracket 150 includes a bracket body 160, a compression plate 170, and an elastic assembly 180. The compression plate 170 and the elastic assembly 180 are disposed on two sides of the bracket body 160. Regarding cooperation between the compression plate 170 and the bracket body 160, refer to related dispositions in the foregoing embodiments, and details are not described herein again. The elastic assembly 180 includes a cross beam 183, a first connecting member 181, a second connecting member 182, and an elastic member 184. The cross beam 183 is connected to one side of the bracket body 160 through the first connecting member 181 and the second connecting member 182. There is a gap between the cross beam 183 and the bracket body 160. The elastic member 184 is connected to one side of the cross beam 183.

Different from the structures shown in FIG. 8 and FIG. 11, in the elastic bracket 150 shown in FIG. 14, the first connecting member 181 and the second connecting member 182 are only configured to connect the cross beam 183 to the bracket body 160, and the first connecting member 181 and the second connecting member 182 are not elastic. Instead, the elastic member 184 is elastic. As shown in FIG. 16, in the elastic bracket 150, the bracket body 160, the first connecting member 181, and the second connecting member 182 may be integrally formed.

For the cabling shape of the flexible printed circuit 140 wrapped around the elastic bracket 150 shown in FIG. 14, refer to the cabling described in the foregoing embodiments. That is, the cabling shape of the flexible printed circuit 140 is set to an "S" shape or a "Z" shape.

When the flexible printed circuit 140 is wrapped around the cross beam 183 shown in FIG. 14, the flexible printed circuit 140 is in contact with the elastic member 184. That is, the elastic member 184 is located in the second bending area formed by the flexible printed circuit 140. During unfolding of the electronic device, the flexible printed circuit 140 is pulled out of the second part 120, and the flexible printed circuit 140 presses the elastic member 184, to deform the elastic member 184. During folding of the electronic device, because the electronic device no longer bears a force, the elastic member 184 restores to an original shape, to retract the extended flexible printed circuit 140 into the second part 120. The elastic member 184 may be made of foam. The foam has good deformation and deformation restoring capabilities. In addition, the foam is a flexible material, and is not prone to generating relatively severe friction when being in contact with the flexible printed circuit 140, so that damage to the flexible printed circuit 140 can be avoided.

In addition, with reference to FIG. 15, a fastening post 162 is further disposed on the back of the bracket body 160. When a cover fabric 190 needs to be disposed on one side of the flexible printed circuit 140, one end of the cover fabric 190 may be fixedly connected to the fastening post 162 of the elastic bracket 150.

In the foregoing embodiments, three different elastic brackets 150 are described. Working principles of the three different elastic brackets 150 are basically the same, and main differences are as follows: a main difference between the elastic brackets 150 shown in FIG. 8 and FIG. 11 is that the structures of the first connecting member 181 and the second connecting member 182 are different, that is, there is a difference between structures of members providing elasticity; and a main difference between the elastic brackets 150 shown in FIG. 8 (or FIG. 11) and FIG. 14 is that manners of providing an elastic force are different, the elastic brackets 150 shown in FIG. 8 (or FIG. 11) mainly provides an elastic force by deforming the first connecting member 181 and the second connecting member 182, and the elastic bracket 150 shown in FIG. 14 mainly provides an elastic force by deforming the elastic member 184 (foam) on the cross beam 183.

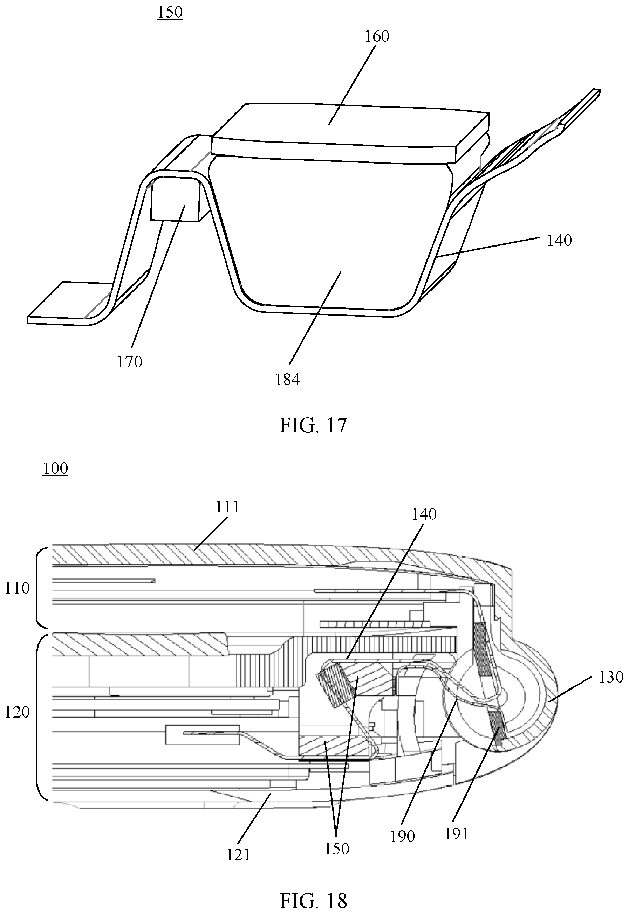

An elastic bracket 150 is further provided in another embodiment of this application. Refer to 17. FIG. 17 is a schematic diagram of a structure of yet another elastic bracket 150 in an electronic device according to an embodiment of this application. As shown in FIG. 17, the elastic bracket 150 includes a bracket body 160 and an elastic member 184 fixedly connected to the bracket body 160. In this structure, the elastic member 184 is an elastic flexible object. For example, the elastic member 184 is foam. Alternatively, the elastic member 184 includes a flexible housing, and elastic colloid is filled inside the housing. Alternatively, a spring is disposed in the housing. Therefore, the entire elastic member 184 can be deformed and restore to an original shape. The bracket body 160 is fastened to a second housing 121, and may be fastened in a form of screwing or gluing. For a connection between the bracket body 160 and the second housing 121, refer to FIG. 5 and FIG. 6. The elastic bracket 150 in FIG. 5 and FIG. 6 is the elastic bracket 150 shown in FIG. 17.

As shown in FIG. 17, a flexible printed circuit 140 is wrapped around the elastic bracket 150. Specifically, the flexible printed circuit is directly in contact with the elastic member 184, and the flexible printed circuit is wrapped around the elastic member 184. A bending area is formed on the elastic member 184, the elastic member 184 is located in the bending area, and a cabling shape of the flexible printed circuit on the elastic member 184 is a "U" shape. One end that is of the flexible printed circuit 140 and that is connected to a second electronic device is pressed on the second housing 121 by a compression plate 170, so that when the flexible printed circuit is pulled out of the second part 120, the flexible printed circuit may press the elastic member 184, to deform the elastic member 184. Therefore, during folding, the elastic member 184 in the elastic bracket 150 may restore to the original shape, to pull back the pulled-out flexible printed circuit 140 in the second part 120. The compression plate 170 may be fastened to the second housing 121 in a manner of screwing.

It should be noted that the contact between the elastic member 184 and the bending area of the flexible printed circuit 140 shown in FIG. 17 also includes a first contact surface and a second contact surface (contact surfaces formed at two corners of the elastic member 184 in FIG. 17). The disposition of the first contact surface and the second contact surface is designed according to related requirements in the foregoing embodiments (making bending angles of the flexible printed circuit 140 be greater than 90°), to prevent the flexible printed circuit 140 from forming bending with a relatively small included angle.

In an embodiment of this application, a cover fabric 190 is further disposed in the electronic device. The cover fabric 190 is disposed on one side of the flexible printed circuit 140. When the electronic device is unfolded or folded, the cover fabric 190 shields the flexible printed circuit 140 from view, to prevent the flexible printed circuit 140 located at a joint of the first part 110 and the second part 120 from being directly exposed to view to affect aesthetics of the electronic device. In addition, the flexible printed circuit 140 is protected from being in contact with sharps from the outside, to prevent the sharps from damaging the flexible printed circuit 140.

When the cover fabric 190 is disposed, the cover fabric 190 may be in close contact with the flexible printed circuit 140 that needs to be covered. Refer back to FIG. 3. As shown in FIG. 3, the cover fabric 190 is in close contact with the flexible printed circuit 140, and the cover fabric 190 may move together with the flexible printed circuit 140. One end of the cover fabric 190 is fixedly connected to the elastic bracket 150. Specifically, as shown in FIG. 3, the compression plate 170 on the elastic bracket 150 may be used to press the cover fabric 190 and the flexible printed circuit 140 together on the bracket body 160. The cover fabric 190 moves with the flexible printed circuit 140. The other end of the cover fabric 190 passes out of the second housing 121 and then enters the rotating shaft cover 130 of the first part 110. The other end of the cover fabric 190 is fixedly connected inside the rotating shaft cover 130 by using a compressing apparatus 191.

In addition, the cover fabric 190 and the flexible printed circuit 140 may not be in close contact with each other. That is, the cover fabric 190 and the flexible printed circuit 140 are separated from each other, and the cover fabric 190 is disposed on one side of the flexible printed circuit 140. For a connection method of the cover fabric 190 in the electronic device, refer to FIG. 18. FIG. 18 is still another partial sectional view of an electronic device according to an embodiment of this application.

As shown in FIG. 18, one end of the cover fabric 190 is fixedly connected to the fastening post 162 on the back of the elastic bracket 150, and the other end of the cover fabric 190 passes out of the second housing 121 and then enters the rotating shaft cover 130 of the first part 110. The other end of the cover fabric 190 is fixedly connected inside the rotating shaft cover 130 by using the compressing apparatus 191. It should be noted that the elastic bracket 150 shown in FIG. 18 is the elastic bracket 150 shown in FIG. 14. The elastic brackets 150 shown in FIG. 8 and FIG. 11 may also be provided with the fastening posts 162 on the backs of the bracket bodies 160 of the elastic brackets. Therefore, the elastic bracket 150 in FIG. 18 may also be replaced with the elastic brackets 150 shown in FIG. 8 and FIG. 11, and after the replacement, the connection of the cover fabric 190 in the second part 120 is not affected.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

The embodiments in this specification are all described in a progressive manner. Descriptions of each embodiment focus on differences from other embodiments, and same or similar parts among respective embodiments may be mutually referenced.

Although preferred embodiments of the embodiments of this application have been described, persons skilled in the art can make other changes and modifications to these embodiments once they know the basic creative concept of this application. Therefore, the protection scope of this application includes preferred embodiments and all changes and modifications falling within the scope of the embodiments of this application.

Specific examples are used in this specification to describe a working principle and an implementation of the electronic device in this application, and the descriptions of the foregoing embodiments are merely intended to help understand a transmission circuit and a core idea of the transmission circuit of this application. Meanwhile, a person of ordinary skill in the art may make modifications to specific implementations and application range according to the idea of this application. In conclusion, the content of this specification should not be construed as a limitation on this application.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. An electronic device, wherein the electronic device comprises a first part, a second part, and a flexible printed circuit, the first part and the second part being rotatably connected to each other through a rotating shaft, so that the electronic device can be unfolded or folded, and the first part and the second part being further electrically connected to each other through the flexible printed circuit;
the second part comprises an elastic bracket, and the flexible printed circuit is wrapped around the elastic bracket;
during unfolding of the electronic device, the first part drives the flexible printed circuit to move from the second part to the first part, and the flexible printed circuit drives the elastic bracket to deform; and
during folding of the electronic device, the elastic bracket restores to an original shape, drives the flexible printed circuit to move from the first part to the second part, and retracts the extended flexible printed circuit into the second part.

2. The electronic device according to claim 1, wherein the elastic bracket comprises a bracket body, a compression plate, and an elastic assembly;
the elastic assembly comprises a cross beam, a first connecting member, and a second connecting member, two ends of the cross beam being fixedly connected to the bracket body through the first connecting member and the second connecting member; and
the bracket body is fixedly connected to the second part, the flexible printed circuit is compressed on the bracket body by the compression plate, and the flexible printed circuit is wrapped around the cross beam.

3. The electronic device according to claim 2, wherein both the first connecting member and the second connecting member are elastic;
during unfolding of the electronic device, the flexible printed circuit is pulled out from the second part, the flexible printed circuit drives the cross beam to move, and the cross beam drives the first connecting member and the second connecting member to deform; and
during folding of the electronic device, the first connecting member and the second connecting member restore to original shapes, to drive the cross beam to move, and the cross beam retracts the extended flexible printed circuit into the second part.

4. The electronic device according to claim 3, wherein the cross beam comprises a first support beam and a second support beam, the first support beam and the second support beam being in close contact, the first support beam being a rigid beam, and the second support beam being a flexible beam; and
when the flexible printed circuit is wrapped around the cross beam, the flexible printed circuit is in contact with the second support beam.

5. The electronic device according to claim 3 or 4, wherein a structure of the first connecting member is the same as a structure of the second connecting member;
the first connecting member comprises a first cross bar, a first vertical bar, and a second cross bar;
two ends of the first vertical bar are respectively connected to the first cross bar and the second cross bar, the first cross bar is connected to the bracket body, and the second cross bar is connected to the cross beam; and
the first vertical bar is perpendicular to both the first cross bar and the second cross bar, and the first cross bar is also perpendicular to the second cross bar.

6. The electronic device according to any one of claims 3 to 5, wherein both the first connecting member and the second connecting member are made of silicone rubber.

7. The electronic device according to claim 2, wherein the elastic assembly further comprises an elastic member, the elastic member being disposed on one side of the cross beam, and the flexible printed circuit being in contact with the elastic member when the flexible printed circuit is wrapped around the cross beam;
during unfolding of the electronic device, the flexible printed circuit is pulled out from the second part, and the flexible printed circuit presses the elastic member, to deform the elastic member; and
during folding of the electronic device, the elastic member restores to an original shape, to retract the extended flexible printed circuit into the second part.

8. The electronic device according to claim 7, wherein the elastic member is made of foam.

9. The electronic device according to any one of claims 2 to 8, wherein a cabling shape of the flexible printed circuit on the elastic bracket is an "S" shape, and the flexible printed circuit is separately in contact with the bracket body and the cross beam;
a surface that is of the bracket body and that is in contact with the flexible printed circuit is a first contact surface, and a surface that is of the cross beam and that is in contact with the flexible printed circuit is a second contact surface; and
the first contact surface and the second contact surface are arc surfaces or elliptic surfaces, and central angles corresponding to the first contact surface and the second contact surface are less than 90°.

10. The electronic device according to claim 1, wherein the elastic bracket comprises a bracket body, an elastic member, and a compression plate, the bracket body being fixedly connected to the second part, and the elastic member being fixedly connected to the bracket body; and
the flexible printed circuit is wrapped around the elastic member, and one end of the flexible printed circuit is compressed on the second part by the compression plate.

11. The electronic device according to claim 10, wherein a cabling shape of the flexible printed circuit on the elastic bracket is a "U" shape, and the flexible printed circuit is in contact with the elastic member;
a surface that is of the elastic member and that is in contact with the flexible printed circuit comprises a first contact surface and a second contact surface; and
the first contact surface and the second contact surface are arc surfaces or elliptic surfaces, and central angles corresponding to the first contact surface and the second contact surface are less than 90°.

12. The electronic device according to any one of claims 1 to 11, wherein the first part further comprises a rotating shaft cover, the rotating shaft cover rotating with the first part relative to the second part; and
the flexible printed circuit passes through the rotating shaft cover.

13. The electronic device according to claim 12, wherein a cover fabric is disposed on one side of the flexible printed circuit, and when the electronic device is unfolded or folded, the cover fabric shields the flexible printed circuit from view.

14. The electronic device according to claim 13, wherein a fastening post is disposed on the flexible bracket, one end of the cover fabric is fixedly connected to the fastening post, and the other end of the cover fabric is connected inside the rotating shaft cover through a compressing apparatus.

15. The electronic device according to claim 13, wherein the cover fabric is in close contact with the flexible printed circuit, the cover fabric moves together with the flexible printed circuit, one end of the cover fabric is fixedly connected to the elastic bracket, and the other end of the cover fabric is connected inside the rotating shaft cover through a compressing apparatus.

16. The electronic device according to any one of claims 1 to 15, wherein rotation angles of the first part and the second part are in a range of 0° to 180°.
